# EUROPÄISCHE PATENTSCHRIFT

(11) **EP 2 995 706 B1**
(45) Veröffentlichungstag und Bekanntmachung des Hinweises auf die Patenterteilung: **17.10.2018**
(21) Anmeldenummer: 15179593.7
(22) Anmeldetag: 04.08.2015
(51) Int. Cl.: D03D 1/00, D03D 15/00, D03D 13/00, B60C 9/00, B29D 30/38, B60C 9/18

(54) **GEWEBE ZUR HERSTELLUNG VON FESTIGKEITSTRÄGERLAGEN FÜR REIFEN UND FAHRZEUGLUFTREIFEN MIT DIESEM GEWEBE**
FABRIC FOR THE MANUFACTURE OF REINFORCING SUPPORT LAYERS FOR TIRES AND VEHICLE TYRES WITH THIS FABRIC
TISSU DESTINE A FABRIQUER DES RENFORTS POUR PNEUS ET PNEUS DE VEHICULE AUTOMOBILE DOTES DUDIT TISSU

(30) Priorität: 12.09.2014 DE 102014218358
(43) Veröffentlichungstag der Anmeldung: 16.03.2016
(73) Patentinhaber: Continental Reifen Deutschland GmbH, 30165 Hannover (DE)
(72) Erfinder: Pöhler, Ute, 30900 Wedemark (DE); Justine, Carole, 31535 Scharrel (DE); Silva, Ricardo, 30165 Hannover (DE); Wahl, Günter, 31249 Hohenhameln (DE); Kramer, Thomas, 32049 Herford (DE)
(74) Vertreter: Finger, Karsten

(56) Entgegenhaltungen:
- EP-A1- 0 046 911
- EP-A1- 2 765 333
- EP-A1- 2 765 334
- DE-A1-102009 040 289
- DE-A1-102012 112 014
- DE-U1- 8 613 729

## Beschreibung

Die Erfindung betrifft ein Reifengewebe, welches in zwei Kautschukmischungsbahnen eingebettet ist, zur Herstellung von Festigkeitsträgerlagen für Reifen, insbesondere Fahrzeugluftreifen, wobei das Gewebe in Leinwandbindung vorliegt, wobei das Gewebe ein erstes Kettfadensystem mit ersten Kettfäden und ein Schussfadensystem mit Schussfäden aufweist.

Die üblichen, bei der Herstellung von Festigkeitsträgerlagen für Fahrzeugluftreifen, wie beispielsweise Festigkeitsträgerlagen der Karkasse, des Gürtels, der Gürtelbandage, Wulstverstärkung und dergleichen, verwendeten Geweben bestehen aus einer Vielzahl von parallel zueinander und in relativ hoher Dichte angeordneten Kettfäden, welche als Festigkeitsträger fungieren und aus in vergleichsweise großen Abständen zueinander verlaufenden Schussfäden. Diese so genannten Reifenkordgewebe sind sehr instabil und es ist daher auch die Verteilung der Kettfäden über die Gewebebreite nicht gleichmäßig. Die Festigkeit wird von Kettfäden erwirkt. Die Schussfäden sind nur sogenannte Prozesshilfsmittel und haben kaum tragende Funktion. Die Gewebe werden gummifreundlich ausgerüstet und mit Kautschukmischungsbahnen kalandriert, welche nach entsprechendem Zuschnitt in verschiedenen Applikationen in Reifen eingesetzt werden.

Bekannt sind Reifenkordgewebe in Leinwandbindung. Wie bei einer solchen Leinwandbindung üblich ist die Stabilität der Gewebestruktur durch die Dichte der Kett- und Schussfäden sowie durch die Einarbeitung der Kettfäden gegeben. Ein solches Gewebe weist eine verhältnismäßig große geometrische Dehnbarkeit in Kettrichtung auf. Aus der DE 10 2009 040 289 A1 ist eine Verstärkungsstruktur für Fahrzeugluftreifen bekannt, welche beispielsweise als Wulstfahne oder Wulstverstärker vorgesehen ist. Die Verstärkungsstruktur weist mindestens eine Lage eines Gewebes mit Dreherbindung auf und ist derart im Reifen eingebaut, dass sich die Kettgarne des Gewebes in radialer Richtung und die Schussgarne des Gewebes in Umfangsrichtung erstrecken. Das Gewebe weist dabei vorzugsweise Kettgarnpaare auf, deren Kettgarne jeweils zwischen den Schussgarnen miteinander verdrillt sind. Für die Kettgarne können Fasern verschiedener Materialen, beispielsweise Polyamid oder Aramid, eingesetzt werden.
Die EP 0 046 911 A1 offenbart ein gewebtes Gurtband aus Kettfäden und paarweise verwebten Schussfäden. Ein Teil der Kettfäden liegt glatt im Gewebe und ist mit einer ganz geringen Einarbeitung in das Gewebe eingebunden. Die weiteren Kettfäden werden beim Weben mit geringer Spannung zugeführt und sind mit Einarbeitung in das Gewebe eingebunden. Das Gurtband ist beispielsweise zur Rahmenbespannung vorgesehen und dient dabei als Unterfederung unter Kissen aus Schaumstoff oder unter Federkernen zur Erzielung einer zusätzlichen elastischen Federung. Aus der DE 86 13 729 U1 ist ein Gewebe in Leinwandbindung für Jachtsegel bekannt, welches wechselweise lose und gespannt eingebundene Kettfäden aufweist.

Dokument DE 10 2012 112 014 A1 offenbart ein Reifenkordgewebe, dass beidseitig mit einer Kautschukmischungsbahn verbunden ist.

Der Erfindung liegt die Aufgabe zugrunde, ein Gewebe, welches in Kautschukmischungsbahnen eingebettet ist, zur Herstellung von Festigkeitsträgerlagen für Reifen, insbesondere Fahrzeugluftreifen, zur Verfügung zu stellen, dessen Dehnbarkeit in Kettrichtung verringert ist und welches schiebefester und stabiler ist.
Gelöst wird die gestellte Aufgabe erfindungsgemäß dadurch, dass die ersten Kettfäden ohne Einarbeitung in das Gewebe eingebunden sind, dass das Gewebe ein zweites Kettfadensystem aus zweiten Kettfäden aufweist und dass die zweiten Kettfäden mit Einarbeitung in das Gewebe eingebunden sind.

Die "Einarbeitung" ist die durch Faktoren wie Fadendichte, Fadenspannung, Bindungsart des Gewebes sowie Titer bedingte Verkürzung des Kett- bzw. Schußfadens.

Gewebe in Leinwandbindung mit zwei Kettfadensystemen sind an sich bekannt. Bedeutend ist dabei, dass die zwei Kettfadensysteme unterschiedliche Funktionen erfüllen. Die Festigkeit und Dehnbarkeit des Gewebes in Kettrichtung ist weitgehend durch das erste Kettfadensystem bestimmt. Wesentlich ist hierbei, dass die ersten Kettfäden, welche die Funktion von Festigkeitsträgern übernehmen, ohne Einarbeitung als Gelege in das Gewebe eingebunden sind. Die Dehnbarkeit des Gewebes in Kettrichtung ist somit beachtlich reduziert oder verschwindet ganz, weil Beanspruchungen vor allem oder ganz von den ersten Kettfäden, welche bereits weitgehend geradlinig angeordnet sind, aufgenommen werden. Bei Beanspruchung erfolgt also ein direkterer oder direkter Kraftübertrag auf die Festigkeitsträger des ersten Kettfadensystems.

Die Verbindung der Kettfäden mit dem Schußfadensystem bzw. die Stabilität der Gewebestruktur wird vorrangig mit dem zweiten Kettfadensystem realisiert. Das zweite Kettfadensystem gewährleistet somit die Schiebefestigkeit des Gewebes und es wird die sich bei der Herstellung des Gewebes ergebende gleichmäßige Verteilung der ersten Kettfäden über die Gewebebreite auch im kalandrierten Zustand des Gewebes beibehalten. Hierdurch ist die Fadendichte der ersten Kettfäden variabel wählbar, insbesondere können solche Reifengewebe auch mit einer sehr geringen Fadendichte der Festigkeitsträger in Kettrichtung gefertigt werden, wobei gleichzeitig eine hohe Stabilität gewährleistet werden kann.

Die zweiten Kettfäden und die Schussfäden müssen eine ausreichende Prozessierbarkeit, beispielsweise durch eine geeignete Bruchfestigkeit, gewährleisten. Vorteilhaft ist beispielsweise die Verwendung von Polyestergarnen.

Somit ist ein Gewebe zum beidseitigen Verbinden mit Kautschukmischungsbahnen zur Herstellung von Festigkeitsträgerlagen für Reifen, insbesondere Fahrzeugluftreifen, zur Verfügung gestellt, dessen Dehnbarkeit in Kettrichtung verringert ist und welches schiebefester und stabiler ist.

Eine "Leinwandbindung" ist eine Gewebebindung, in der jeder Kettfaden abwechselnd über oder unter einem Schussfaden zu liegen kommt.

Ein "Faden" ist im Sinne der Erfindung ein linienförmiges Gebilde mit einer Haupterstreckung als Längserstreckung. Es kann sich dabei um eine Endlosfaser, um ein Garn oder um einen Kord handeln. Eine "Endlosfaser" ist eine einzelne Faser praktisch unbegrenzter Länge und wird üblicherweise auch als Monofilament bezeichnet. Ein "Garn" kann aus einem oder mehreren Endlosfasern oder aus Stapelfasern gebildet sein. Bei einem verdrehten Garn sind die Fasern des Garns miteinander verdreht. Ein "Kord" besteht aus mindestens zwei Garnen, welche miteinander endverdreht sind. Bei einem Faden kann es sich auch um ein linienförmiges Gebilde handeln, bei dem die Höhe h und die Breite b des Querschnitts des Fadens voneinander abweichen. Der "Querschnitt" eines Fadens ist die zur Längserstreckung orthogonale Schnittfläche, die durch die den Faden von außen berührende Einhüllende eingeschlossen ist. Die Höhe h und die Breite b sind orthogonal zueinander gemessen. Die Orientierung ist dabei so gewählt, dass die Höhe h den minimalen Wert einnimmt.

In einem bevorzugten Ausführungsbeispiel weist das Gewebe zumindest einen ersten Kettfaden auf, der durch ein Endlosfilament, ein verdrehtes Garn oder einen Kord gebildet ist. Bei einfacher Konstruktion weist ein solches Reifengewebe eine hohe Schiebefestigkeit und eine hohe Stabilität auf.

Ein weiteres bevorzugtes Reifengewebe im Rahmen der Erfindung weist zumindest einen ersten Kettfaden auf, der durch einen flachen ersten Kettfaden gebildet ist, wobei der Querschnitt des flachen ersten Kettfadens der Bedingung b/h > 1, insbesondere der Bedingung b/h > 1,3, besonders bevorzugt der Bedingung b/h ≥ 1,5, entspricht, wobei h die Höhe und b die Breite des Querschnitts ist, und wobei im Gewebe die Erstreckungsrichtung der Breite b in etwa parallel zur flächigen Erstreckung des Gewebes ausgerichtet ist. Das Gewebe weist somit eine geringere Höhe auf als ein entsprechendes Gewebe, dessen erste Kettfäden die gleiche Querschnittsfläche, aber einen kreisförmigen Querschnitt aufweisen. Da die flachen Festigkeitsträger des ersten Kettfadensystems ohne Einarbeitung im Gewebe angeordnet sind, ist zudem ein noch flacheres Gewebe zur Verfügung gestellt, welches die Herstellung einer Festigkeitsträgerlage mit einer noch geringeren Höhe ermöglicht. Dies bedingt eine geringere Hysterese des Fahrzeugluftreifens. Auch durch die Einsparung an Kautschukmaterial sowie an Festigkeitsträgermaterial sind Hysterese sowie Gewicht reduziert. Beim Einsatz in Fahrzeugluftreifen kann somit ein weiter verringerter Rollwiderstand erwirkt werden.

In einem bevorzugten Ausführungsbeispiel weist zumindest ein flacher erster Kettfaden eine Folie auf. Der flache erste Kettfaden kann ein Laminat aufweisend eine Folie oder genau eine Folie sein. Ein solcher flacher erster Kettfaden ist ein besonders geeigneter Festigkeitsträger mit flachem Querschnitt für eine Festigkeitsträgerlage für Reifen, insbesondere Fahrzeugluftreifen.

Ein weiterer hierzu besonders geeigneter Festigkeitsträger als flacher erster Kettfaden des ersten Kettfadensystems ist durch ein zusammenhängendes Filamentbündel gebildet ist, welches eine Vielzahl an Filamenten enthält, welche in etwa parallel zur Längserstreckung des flachen ersten Kettfadens angeordnet sind und mittels eines Haftvermittlers zusammengehalten sind. Eine Vielzahl an Filamenten bedeutet hierbei eine Anzahl von mindestens 20 Filamenten. Jedes Filament ist mit einem Haftvermittler verbunden und wird mittels dieses Haftvermittlers zumindest abschnittsweise mit anderen Filamenten zu dem zusammenhängenden Filamentbündel zusammengehalten. Der Haftvermittler kann ein vernetzbares Harz, ein flüssiges thermoplastisches Harz, ein Wachs oder eine Substanz, welche mit elastomerem Material wechselwirken kann, sein. Die Filamente sind nicht gezielt miteinander verdreht, sondern größtenteils zumindest abschnittsweise parallel angeordnet, wobei auch Kreuzungen von Filamenten möglich sind. Die geringe Höhe h sowie die Breite b des zusammenhängenden Filamentbündels wird durch die Anordnung der Filamente, welche vorrangig in Erstreckungsrichtung der Breite b nebeneinander angeordnet sind, bewirkt.

Als "Filament" wird im Sinne der Anmeldung ein linienförmiges Gebilde verstanden, das sich im Wesentlichen über die gesamte Längserstreckung des das Filament aufweisenden Kettfadens erstreckt. Ein Filament kann eine Endlosfaser oder ein Stapelfasergarn sein. Bevorzugt für einen flachen ersten Kettfaden sind Endlosfasern als Filamente.

Als weiterer hierzu besonders geeigneter Festigkeitsträger als flacher erster Kettfaden des ersten Kettfadensystems hat sich ein loses Filamentbündel herausgestellt, welches aus einer Vielzahl an Filamenten besteht, welche in etwa parallel zur Längserstreckung des flachen ersten Kettfadens angeordnet sind. Die Filamente des losen Filamentbündels sind nicht durch einen Haftvermittler miteinander verbunden. Die Filamente sind dabei nicht gezielt miteinander verdreht, sondern größtenteils zumindest abschnittsweise parallel angeordnet, wobei auch Kreuzungen von Filamenten möglich sind. Die geringe Höhe h sowie die Breite b des zusammenhängenden Filamentbündels wird durch die Anordnung der Filamente, welche vorrangig in Erstreckungsrichtung der Breite b nebeneinander angeordnet sind, bewirkt.

Zweckmäßig ist es, wenn solch ein zusammenhängendes oder loses Filamentbündel eine Anzahl von 25 bis 4500 Filamenten, bevorzugt eine Anzahl von 450 bis 2000 Filamenten, besonders bevorzugt eine Anzahl von 500 bis 1200 Filamenten, aufweist. Zur Steigerung der Haftung zwischen Filamenten und Haftimprägnierung oder Filamenten und Kautschukmaterial ist es zweckmäßig, die Oberfläche der Filamente mechanisch, physikalisch und / oder chemisch zu aktivieren.

Vorteilhaft ist es, wenn das Verhältnis von Breite b zu Höhe h des flachen ersten Kettfadens die Bedingung 4000 > b / h > 2, insbesondere 200 > b / h > 3,5, insbesondere 19 > b / h > 6,5, erfüllt. Der Fahrzeugluftreifen, der solche Festigkeitsträger als erste Kettfäden eines Gewebes einer Festigkeitsträgerlage, insbesondere der Gürtelbandage, des Gürtels, der Wulstverstärkung und / oder der Karkasse, aufweist, ist besonders in Bezug auf den Rollwiderstand bei guten übrigen Eigenschaften des Reifens verbessert.

Zweckmäßig ist es hierfür auch, wenn die Höhe h der flachen ersten Kettfäden die Bedingung 1 µm < h < 1500 µm, bevorzugt 1 µm < h < 500 µm, besonders bevorzugt 1 µm < h < 350 µm, erfüllt. Zweckmäßig ist es auch, wenn die Breite b der flachen ersten Kettfäden die Bedingung 100 µm < b < 15000 µm, bevorzugt 500 µm < b < 5000 µm, erfüllt.

Die Feinheit der Fäden im erfindungsgemäßen Gewebe richtet sich nach dem Einsatzzweck und kann in einem sehr weiten Bereich variiert werden. Zweckmäßig ist es, wenn die ersten Kettfäden eine Feinheit von 50 dtex bis 7000 dtex, bevorzugt von 400 dtex bis 3500 dtex, besonders bevorzugt von 750 dtex bis 2000 dtex, aufweisen.

In einer bevorzugten Ausführungsform weist das Gewebe erste Kettfäden aus nicht-metallischem Material, bevorzugt aus nicht-metallischem Material ausgewählt aus der nicht abgeschlossenen Gruppe gebildet aus Polyamid und/oder Polyester und/oder Rayon und/oder Aramid und/oder Polyoxadiazol und/oder Karbon und/oder Glas und/oder aus Mischungen und/oder aus Derivaten dieser Materialen, auf. Bevorzugt ist der erste Kettfaden aus Aramid. Ein erster Kettfaden ist aus einem Material gebildet, wenn das Festigkeitsträgermaterial ganz oder teilweise aus diesem Material gebildet ist, insbesondere wenn der ersten Kettfaden Filamente aus diesem Material aufweist. Bevorzugt sind alle Filamente des ersten Kettfadens aus dem gleichen Material gebildet. Der erste Kettfaden kann aber auch Filamente aus unterschiedlichen Materialien aufweisen. Das Material kann je nach Einsatzzweck und Anforderung entsprechend gewählt werden.

Bei den Polyamiden (PA) kann es sich um die Polyamide PA 4.6, PA 4.10, PA 6, PA 6.6, PA 10.10, PA 11 und/oder PA12, bevorzugt um PA 4.10, PA 6.6 und/oder PA 10.10, handeln. Bei den Polyestern kann es sich um die Polyester Polyethylennaphthalat (PEN), Polyethylenfuranoat (PEF), Polybutylenterephthalat (PBT), Polybutylennaphttalat (PBN), Polypropylenterephthalat (PPT), Polypropylennaphthalat (PPN), Polyethylenterephthalat (PET) und/oder High-Modulus Low-Shrinkage-PET (HMLS-PET), insbesondere um thermoplastische Polyester und/oder vernetzte ungesättigte Polyester, handeln. Bevorzugt handelt es sich um PET und/oder PEN. Bei Aramid kann es sich um para-Aramid und/oder meta-Aramid und/oder para-Aramid-Copolymere, bevorzugt um para-Aramid, handeln. Aufzählungen, die "und/oder" enthalten, sind so zu verstehen, dass alle Glieder der Aufzählung mit und/oder gekoppelt sind.

Ein besonders einfaches Gewebe ergibt sich, wenn alle ersten Kettfäden gleich ausgebildet sind.

In einer anderen bevorzugten Ausführungsform weist das erste Kettfadensystem zumindest zwei erste Kettfäden auf, die sich voneinander unterscheiden, bevorzugt die sich in ihrem Material und/oder in ihrem Aufbau und/oder in ihrem Querschnitt unterscheiden. Die Anordnung der unterschiedlichen ersten Kettfäden des Gewebes kann alternierend erfolgen. Es können unterschiedliche flache erste Kettfäden kombiniert werden. Es können auch flache erste Kettfäden mit Endlosfasern, verdrehten Garnen und/oder Korden kombiniert werden. Durch die Verwendung unterschiedlicher erster Kettfäden als Festigkeitsträger können die Vorteile der einzelnen Festigkeitsträger kombiniert und somit die Eigenschaften, beispielsweise bezüglich Rollwiderstand, Dehnbarkeit und/oder Festigkeit, gezielt eingestellt und optimiert werden.

Um eine zuverlässige Haftung des Gewebes zum elastomeren Material zu gewährleisten, ist es vorteilhaft, Fäden, insbesondere die ersten Kettfäden, des Gewebes vor der Einbindung in das Gewebe und/oder das Gewebe mit einer Haftimprägnierung, z.B. mit einem RFL-Dip im 1- oder 2-Bad-Verfahren, zu versehen.

Zweckmäßig ist es, wenn die Erstreckung der zweiten Kettfäden in Erstreckungsrichtung der Höhe h des Querschnitts der ersten Kettfäden kleiner ist als die Höhe h der ersten Kettfäden. Hierdurch ist eine besonders geringe Höhe des Gewebes erwirkt.

Die Erfindung betrifft ferner einen Fahrzeugluftreifen in Radialbauart mit einem Laufstreifen, einem mehrlagigen Gürtel, einer Gürtelbandage, einer Karkasse und mit zwei Wulstbereichen, welcher in der Gürtelbandage und/oder dem Gürtel und/oder der Karkasse und/oder in einem Verstärkungsstreifen in einem der Wulstbereiche ein erfindungsgemäßes Gewebe aufweist. Es handelt sich dabei vorzugsweise um einen PKW-Reifen oder um einen Nutzfahrzeugreifen. Ein solcher Reifen zeichnet sich durch einen verringerten Rollwiderstand aus.

Weitere Merkmale, Vorteile und Einzelheiten der Erfindung werden nun anhand der schematischen Zeichnungen, die Ausführungsbeispiele darstellen, näher erläutert. Dabei zeigt die
Fig. 1 eine perspektivische Darstellung eines Abschnitts eines erfindungsgemäßen Gewebes,
Fig. 2 bis 4 jeweils einen Querschnitt durch einen flachen ersten Kettfaden und
Fig. 5 eine perspektivische Darstellung eines Abschnitts eines weiteren erfindungsgemäßen Gewebes.

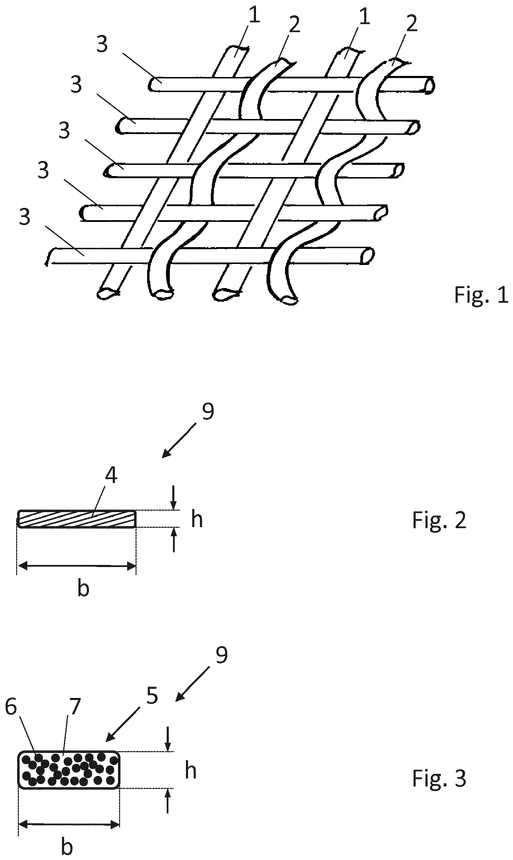

Fig. 1 zeigt einen Abschnitt eines im Rahmen der Erfindung einsetzbaren Gewebes in Leinwandbindung mit zwei Kettfadensystemen. Für den erfindungsgemäßen Einsatz als Festigkeitsträgergewebe für elastomere Erzeugnisse wird die Fadendichte des Gewebes derart bemessen, dass Kautschukmischungsbahnen, zwischen welchen das Gewebe beispielsweise durch Kalandrieren eingebettet wird, durch das Gewebe hindurch miteinander verbunden werden.

Das Gewebe weist ein erstes Kettfadensystem mit ersten Kettfäden 1, ein zweites Kettfadensystem mit zweiten Kettfäden 2 und ein Schussfadensystem mit Schussfäden 3 auf. Die ersten Kettfäden 1 und zweiten Kettfäden 2 sind alternierend angeordnet. Die ersten Kettfäden 1 sind ohne Einarbeitung in das Gewebe eingebunden und sind somit weitgehend flach als Gelege angeordnet. Die zweiten Kettfäden 2 sind mit Einarbeitung in das Gewebe eingebunden. Sie sind somit in etwa wellenlinienförmig angeordnet und verlaufen in jedem Tiefgang unterhalb eines Schussfadens 3 und in jedem Hochgang oberhalb eines Schussfadens 3, wobei die Erhebung der Welle in etwa senkrecht zur flächigen Erstreckung des Gewebes erfolgt.

Die ersten Kettfäden 1 des in Fig. 1 gezeigten Gewebes sind alle gleich ausgebildet. Für den Einsatz als Verstärkungsgewebe für Fahrzeugluftreifen eignet sich als Material insbesondere Rayon, Polyester, Polyamid, beispielsweise PA 6.6, oder Aramid, beispielsweise para-Aramid, oder Hybridmaterialien wie beispielsweise PA 6.6/Aramid. Ein erster Kettfaden 1 kann aus einem Faden mit einem Querschnitt mit b/h > 1 gebildet sein, insbesondere aus einer Folie oder einem zusammenhängenden Filamentbündel oder einem losen Filamentbündel. Ein erster Kettfaden 1 kann auch aus einem Endlosfilament, aus einem verdrehten Garn oder aus einen Kord gebildet sein. Die Feinheit und der Querschnitt der ersten Kettfäden 1 richtet sich nach dem Einsatzzweck und kann in einem sehr weiten Bereich variiert werden. In Frage kommen vor allem Fäden einer Feinheit von 250 dtex bis 4000 dtex, insbesondere von 700 dtex bis 3000 dtex. Die zweiten Kettfäden 2 und die Schussfäden 3 sind Garne aus PET. Die zweiten Kettfäden 2 sowie die Schussfäden weisen dabei eine geringere Höhe auf als die ersten Kettfäden 1.

Ein solches Gewebe kann als Verstärkungsgewebe in der Karkasse, der Gürtelbandage, dem Gürtel und/oder der Wulstverstärkung und dergleichen eingesetzt werden, wobei das Gewebe beidseitig mit einer Kautschukmischungsbahn mittels Kalandrieren verbunden ist. Die Einarbeitung der zweiten Kettfäden 2 gestattet es auch, Gewebe mit einer sehr geringen oder einer sehr hohen Fadendichte an ersten Kettfäden 1 anzufertigen, ohne dass die Stabilität der Gewebestruktur leidet.

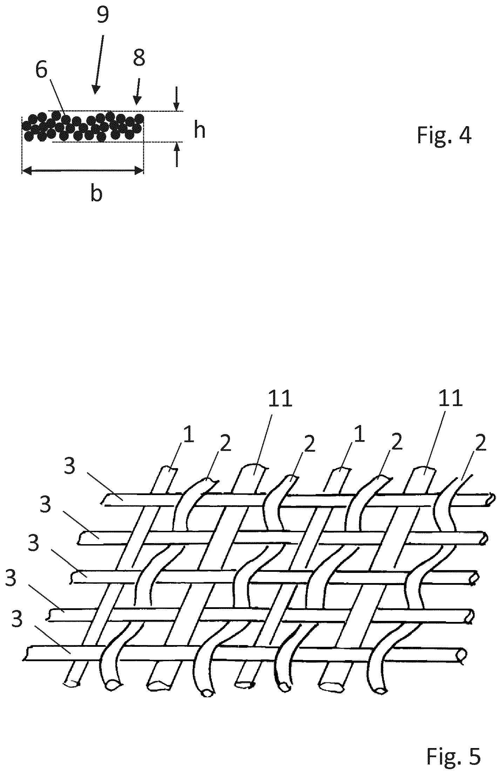

Die Fig. 2 bis Fig. 4 zeigen jeweils einen Querschnitt eines Fadens, der sich als erster Kettfaden 1 eines erfindungsgemäßen Gewebes eignet. Gezeigt wird jeweils ein flacher erster Kettfaden 9 mit b/h > 1,3. Ein solcher flacher erster Kettfaden 9 ist so in ein wie in Fig. 1 oder in Fig. 5 dargestelltes Gewebe eingebunden, dass die Erstreckungsrichtung der Breite b in etwa parallel zur flächigen Erstreckung des Gewebes ausgerichtet ist.

In der Fig. 2 ist eine Folie 4 aus PEN mit einem weitgehend rechteckigen Querschnitt mit Höhe h = 50 µm und einem Verhältnis Breite zu Höhe b/h = 120, d.h. mit einer Breite von 6000 µm, dargestellt. Die Folie 4 ist mit einem RFL-Dip zur Haftimprägnierung versehen. Ein wie in Fig. 1 dargestelltes Gewebe, dessen erste Kettfäden 1 als eine solche Folie 4 ausgebildet sind, eignet sich hervorragend für die Karkasse von Fahrzeugluftreifen.

Die Fig. 3 zeigt ein zusammenhängendes Filamentbündel 5 mit einer Höhe h = 90 µm und einem Verhältnis Breite zu Höhe b/h = 15, d.h. mit einer Breite von 1350 µm. Das zusammenhängende Filamentbündel 5 enthält bei einer Feinheit von 1300 dtex eine Anzahl von in etwa 1000 Filamenten 6, welche aus para-Aramid gebildet sind, in etwa parallel zueinander angeordnet sind und mittels eines vernetzbaren Harzes als Haftvermittler 7 zusammengehalten sind. Der Übersichtlichkeit halber ist in Fig. 3 nur eine geringe Zahl der Filamente 6 dargestellt. Der Haftvermittler 7 macht dabei 4 Gew.-% des Gewichtes des zusammenhängenden Filamentbündels 5 aus. Das zusammenhängende Filamentbündel 5 ist mit einem RFL-Dip zur Haftimprägnierung versehen. Ein wie in Fig. 1 dargestelltes Gewebe, dessen erste Kettfäden 1 derart ausgebildet sind, eignet sich hervorragend als Reifengewebe für die Gürtelbandage von Fahrzeugluftreifen.

In der Fig. 4 ist ein loses Filamentbündel 8 mit einer Höhe h = 170 µm und einem Verhältnis Breite zu Höhe b/h = 20 dargestellt. Das lose Filamentbündel 8 enthält bei einer Feinheit von 1670 dtex eine Anzahl von in etwa 1500 Filamenten 6, welche aus Aramid gebildet sind und in etwa parallel zueinander angeordnet sind. Der Übersichtlichkeit halber ist in Fig. 4 nur eine geringe Zahl der Filamente 6 dargestellt. Das lose Filamentbündel 8 ist mit einem RFL-Dip zur Haftimprägnierung versehen. Die Haftimprägnierung kann dabei vor Einbindung in das Gewebe und/oder nach der Einbindung in das Gewebe, d.h. für das gesamte Gewebe, erfolgen. Ein wie in Fig. 1 dargestelltes Gewebe, dessen erste Kettfäden 1 derart ausgebildet sind, eignet sich hervorragend als Festigkeitsträgergewebe für die Karkasse von Fahrzeugluftreifen.

Ein weiteres Ausführungsbeispiel der ersten Kettfäden 1 des in Fig. 1 gezeigten Gewebes ist durch Korde gegeben, welche jeweils aus zwei miteinander endverdrehten Garnen aus para-Aramid mit einer Feinheit von jeweils 1100 dtex gebildet sind. Ein wie in Fig. 1 dargestelltes Gewebe, dessen erste Kettfäden 1 aus solchen Korden gebildet sind, eignet sich hervorragend als Karkasslagengewebe von Fahrzeugluftreifen.

Die Fig. 5 zeigt einen Abschnitt eines weiteren im Rahmen der Erfindung einsetzbaren Gewebes in Leinwandbindung. Das Gewebe unterscheidet sich von dem in der Fig. 1 dargestellten Gewebe darin, dass es erste Kettfäden 1, 11 aufweist, welche sich in ihrem Material, Aufbau und Querschnitt voneinander unterscheiden. Die ersten Kettfäden 1 sind dabei Korde, welche aus zwei miteinander endverdrehten PET Garnen gebildet sind. Alternierend zu diesen ersten Kettfäden 1 sind die ersten Kettfäden 11 angeordnet, welche als zusammenhängende Fadenbündel 5 ausgebildet sind. Die ersten Kettfäden 11 weisen dabei Filamente aus PEN und ein Verhältnis Breite zu Höhe b/h ≥ 1,5 auf. Die zweiten Kettfäden 2 sind Korde aus PET. Ein solches Gewebe eignet sich hervorragend für die Karkasse von Fahrzeugluftreifen.

### Bezugszeichenliste

### (Teil der Beschreibung)

- 1, 11: erster Kettfaden des ersten Kettfadensystems
- 2: zweiter Kettfaden des zweiten Kettfadensystems
- 3: Schussfaden des Schussfadensystems
- 4: Folie
- 5: zusammenhängendes Filamentbündel
- 6: Filament
- 7: Haftvermittler
- 8: loses Filamentbündel
- 9: flacher erster Kettfaden

- h: Höhe (erster Kettfaden)
- b: Breite (erster Kettfaden)

## Patentansprüche

1. Reifengewebe, welches in zwei Kautschukmischungsbahnen eingebettet ist, zur Herstellung von Festigkeitsträgerlagen für Reifen, insbesondere Fahrzeugluftreifen,
• wobei das Gewebe in Leinwandbindung vorliegt und
• wobei das Gewebe ein erstes Kettfadensystem mit ersten Kettfäden (1,11) und ein Schussfadensystem mit Schussfäden (3) aufweist,
**dadurch gekennzeichnet,**
• **dass** die ersten Kettfäden (1,11) ohne Einarbeitung in das Gewebe eingebunden sind,
• **dass** das Gewebe ein zweites Kettfadensystem aus zweiten Kettfäden (2) aufweist und
• **dass** die zweiten Kettfäden (2) mit Einarbeitung in das Gewebe eingebunden sind.

2. Reifengewebe nach Anspruch 1, **dadurch gekennzeichnet, dass** das Gewebe zumindest einen ersten Kettfaden (1,11) aufweist, der durch ein Endlosfilament, ein verdrehtes Garn oder einen Kord gebildet ist.

3. Reifengewebe nach Anspruch 1 oder 2, **dadurch gekennzeichnet, dass** das Gewebe zumindest einen ersten Kettfaden (1,11) aufweist, der durch einen flachen ersten Kettfaden (9) gebildet ist, wobei der Querschnitt des flachen ersten Kettfadens (9) der Bedingung b/h > 1, bevorzugt der Bedingung b/h > 1,3, besonders bevorzugt der Bedingung b/h ≥ 1,5, entspricht, wobei h die Höhe und b die Breite des Querschnitts ist, und dass im Gewebe die Erstreckungsrichtung der Breite b in etwa parallel zur flächigen Erstreckung des Gewebes ausgerichtet ist.

4. Reifengewebe nach Anspruch 3, **dadurch gekennzeichnet, dass** zumindest ein flacher erster Kettfaden (9) eine Folie (4) aufweist.

5. Reifengewebe nach Anspruch 3, **dadurch gekennzeichnet, dass** zumindest ein flacher erster Kettfaden (9) durch ein zusammenhängendes Filamentbündel (5) gebildet ist, welches eine Vielzahl an Filamenten (6) enthält, welche in etwa parallel zur Längserstreckung des flachen ersten Kettfadens (9) angeordnet sind und mittels eines Haftvermittlers (7) zusammengehalten sind.

6. Reifengewebe nach Anspruch 3, **dadurch gekennzeichnet, dass** zumindest ein flacher erster Kettfaden (9) durch ein loses Filamentbündel (8) gebildet ist, welches aus einer Vielzahl an Filamenten (6) besteht, welche in etwa parallel zur Längserstreckung des flachen ersten Kettfadens (9) angeordnet sind.

7. Reifengewebe nach einem oder mehreren der Ansprüche 3 bis 6, **dadurch gekennzeichnet, dass** das Verhältnis von Breite b zu Höhe h des flachen ersten Kettfadens (9) die Bedingung 4000 > b / h > 2, insbesondere 200 > b / h > 3,5, insbesondere 19 > b / h > 6,5, erfüllt.

8. Reifengewebe nach einem oder mehreren der Ansprüche 1 bis 7, **dadurch gekennzeichnet, dass** das Gewebe erste Kettfäden (1,11) aus nicht-metallischem Material, bevorzugt aus Polyamid, Polyester, Rayon, Aramid, Polyoxadiazol, Karbon, Glas oder aus Mischungen oder aus Derivaten dieser Materialen, aufweist.

9. Reifengewebe nach einem oder mehreren der Ansprüche 1 bis 8, **dadurch gekennzeichnet, dass** das erste Kettfadensystem zumindest zwei erste Kettfäden (1,11) aufweist, die sich voneinander unterscheiden, bevorzugt die sich in ihrem Material und/oder in ihrem Aufbau und/oder in ihrem Querschnitt unterscheiden.

10. Reifengewebe nach einem oder mehreren der Ansprüche 1 bis 9, **dadurch gekennzeichnet, dass** Fäden, insbesondere die ersten Kettfäden (1,11), des Gewebes vor der Einbindung in das Gewebe und/oder das Gewebe mit einer Haftimprägnierung versehen werden.

11. Fahrzeugluftreifen in Radialbauart mit einem Laufstreifen, einem mehrlagigen Gürtel mit einer Gürtelbandage, einer Karkasse und mit zwei Wulstbereichen, welcher in der Gürtelbandage und / oder dem Gürtel und / oder der Karkasse und / oder in einem Verstärkungsstreifen in einem der Wulstbereiche ein Reifengewebe nach einem der Ansprüche 1 bis 10 enthält.

## Claims

1. Tyre weave embedded into two rubber mixture strips for production of strengthening element plies for tyres, especially pneumatic vehicle tyres,
• where the weave is a plain weave and
• where the weave has a first warp thread system with first warp threads (1, 11) and a weft thread system having weft threads (3),
**characterized in that**
• the first warp threads (1, 11) are bound into the weave without insertion,
• the weave has a second warp thread system composed of second warp threads (2) and
• the second warp threads (2) are bound into the weave with insertion.

2. Tyre weave according to Claim 1, **characterized in that** the weave has at least one first warp thread (1, 11) in the form of a continuous filament, a twisted yarn or a cord.

3. Tyre weave according to Claim 1 or 2, **characterized in that** the weave has at least one first warp thread (1, 11) in the form of a two-dimensional first warp thread (9), where the cross section of the two-dimensional first warp thread (9) meets the condition b/h > 1, preferably the condition b/h > 1.3, more preferably the condition b/h ≥ 1.5, where h is the height and b the width of the cross section, and **in that** the direction in which the width b extends in the weave is roughly parallel to the two-dimensional extent of the weave.

4. Tyre weave according to Claim 3, **characterized in that** at least one two-dimensional first warp thread (9) comprises a film (4).

5. Tyre weave according to Claim 3, **characterized in that** at least one two-dimensional first warp thread (9) is formed by a coherent bundle of filaments (5) comprising a multitude of filaments (6) arranged roughly parallel to the longitudinal extent of the two-dimensional first warp thread (9) and held together by means of an adhesion promoter (7).

6. Tyre weave according to Claim 3, **characterized in that** at least one two-dimensional first warp thread (9) is formed by a loose bundle of filaments (8) consisting of a multitude of filaments (6) arranged roughly parallel to the longitudinal extent of the two-dimensional first warp thread (9).

7. Tyre weave according to one or more of Claims 3 to 6, **characterized in that** the ratio of width b to height h of the two-dimensional first warp thread (9) meets the condition 4000 > b/h > 2, especially 200 > b/h > 3.5, especially 19 > b/h > 6.5.

8. Tyre weave according to one or more of Claims 1 to 7, **characterized in that** the weave has first warp threads (1, 11) made of non-metallic material, preferably of polyamide, polyester, rayon, aramid, polyoxadiazole, carbon, glass or of mixtures or of derivatives of these materials.

9. Tyre weave according to one or more of Claims 1 to 8, **characterized in that** the first warp thread system has at least two first warp threads (1, 11) that differ from one another, preferably differ in their material and/or in their construction and/or in their cross section.

10. Tyre weave according to one or more of Claims 1 to 9, **characterized in that** threads, especially the first warp threads (1, 11), of the weave prior to binding into the weave and/or the weave are/is provided with an adhesive impregnation.

11. Pneumatic vehicle tyre in radial design having a tread, a multilayer belt with a belt bandage, a carcass and two bead regions, comprising a tyre weave according to any of Claims 1 to 10 in the belt bandage and/or the belt and/or the carcass and/or a reinforcement strip in one of the bead regions.

## Revendications

1. Tissu pour pneu, qui est incorporé dans deux bandes de mélange de caoutchouc, pour la fabrication de couches de renfort pour pneu, notamment pour pneu de véhicule automobile,
- le tissu se présentant en armure toile et
- le tissu comprenant un premier système de fils de chaîne avec des premiers fils de chaîne (1, 11) et un système de fils de trame avec des fils de trame (3),
**caractérisé en ce que**
- les premiers fils de chaîne (1, 11) sont liés sans incorporation dans le tissu,
- le tissu comprend un deuxième système de fils de chaîne à base de deuxièmes fils de chaîne (2), et
- les deuxièmes fils de chaîne (2) sont liés avec incorporation dans le tissu.

2. Tissu pour pneu selon la revendication 1, **caractérisé en ce que** le tissu comprend au moins un premier fil de chaîne (1, 11) qui est formé par un filament continu, un fil torsadé ou une corde.

3. Tissu pour pneu selon la revendication 1 ou 2, **caractérisé en ce que** le tissu comprend au moins un premier fil de chaîne (1, 11) qui est formé par un premier fil de chaîne plat (9), la section transversale du premier fil de chaîne plat (9) satisfaisant la condition b/h > 1, de préférence la condition b/h > 1,3, de manière particulièrement préférée la condition b/h ≥ 1,5, h étant la hauteur et b la largeur de la section transversale, et **en ce que** la direction d'extension de la largeur b dans le tissu est orientée approximativement en parallèle de l'extension plate du tissu.

4. Tissu pour pneu selon la revendication 3, **caractérisé en ce qu'**au moins un premier fil de chaîne plat (9) comprend une feuille (4).

5. Tissu pour pneu selon la revendication 3, **caractérisé en ce qu'**au moins un premier fil de chaîne plat (9) est formé par un faisceau de filaments cohérent (5), qui contient une pluralité de filaments (6), qui sont agencés approximativement en parallèle à l'extension longitudinale du premier fil de chaîne plat (9) et sont tenus ensemble au moyen d'un promoteur d'adhésion (7).

6. Tissu pour pneu selon la revendication 3, **caractérisé en ce qu'**au moins un premier fil de chaîne plat (9) est formé par un faisceau de filaments lâche (8), qui est constitué par une pluralité de filaments (6), qui sont agencés approximativement en parallèle de l'extension longitudinale du premier fil de chaîne plat (9) .

7. Tissu pour pneu selon une ou plusieurs des revendications 3 à 6, **caractérisé en ce que** le rapport entre la largeur b et la hauteur h du premier fil de chaîne plat (9) satisfait la condition 4 000 > b/h > 2, notamment 200 > b/h > 3,5, notamment 19 > b/h > 6,5.

8. Tissu pour pneu selon une ou plusieurs des revendications 1 à 7, **caractérisé en ce que** le tissu comprend des premiers fils de chaîne (1, 11) en un matériau non métallique, de préférence en polyamide, polyester, rayonne, aramide, polyoxadiazole, carbone, verre ou en des mélanges ou des dérivés de ces matériaux.

9. Tissu pour pneu selon une ou plusieurs des revendications 1 à 8, **caractérisé en ce que** le premier système de fils de chaîne comprend au moins deux premiers fils de chaîne (1, 11), qui diffèrent l'un de l'autre, de préférence qui diffèrent l'un de l'autre au niveau de leur matériau et/ou au niveau de leur structure et/ou au niveau de leur section transversale.

10. Tissu pour pneu selon une ou plusieurs des revendications 1 à 9, **caractérisé en ce que** les fils, notamment les premiers fils de chaîne (1, 11), du tissu, avant la liaison dans le tissu, et/ou le tissu sont munis d'une imprégnation adhésive.

11. Pneu pour véhicule automobile à structure radiale, comprenant une bande de roulement, une ceinture multicouche comprenant un bandage de ceinture, une carcasse et deux zones de bourrelet, qui contient dans le bandage de ceinture et/ou dans la ceinture et/ou dans la carcasse et/ou dans une bande de renfort dans une des zones de bourrelet un tissu pour pneu selon l'une quelconque des revendications 1 à 10.
